# EUROPEAN PATENT APPLICATION

(11) **EP 3 018 505 A1**
(43) Date of publication of application: **11.05.2016**
(21) Application number: 15174626.0
(22) Date of filing: 30.06.2015
(51) Int. Cl.: G02B 5/20, G02B 5/28, G01S 7/02, H01Q 1/32, H01Q 1/42

(54) **RADIO WAVE PENETRATION-TYPE MULTILAYER OPTICAL COATING**

(30) Priority: 06.11.2014 KR 20140153896
(71) Applicant: Hyundai Motor Company, Seoul 137-938 (KR); Kia Motors Corporation, Seoul 137-938 (KR); Wooshin Industry Co., Ltd., Gyeongsangnam-do 641-865 (KR)
(72) Inventor: CHO, Byung Kyu, 142-761 Seoul (KR); KIM, Seong Jing, 463-850 Gyeonggi-do (KR); HONG, Seung Chan, 463-835 Gyeonggi-do (KR); LEE, Jae Young, 448-150 Gyeonggi-do (KR); SHIM, So Jung, 135-893 Seoul (KR); KIM, Sook Mo, 641-763 Gyeongsangnam-do (KR); SHIN, Hae Jung, 445-893 Gyeonggi-do (KR); RYU, Sang Ju, 445-893 Gyeonggi-do (KR)
(74) Representative: Isarpatent

(57) **Abstract**

Disclosed is a radio wave penetration-type multilayer optical coating. The coating includes: a transparent first resin layer; an optical coating with a multilayer structure formed by alternately forming TiO₂ and SiO₂ on the first resin layer; and an opaque second resin layer formed on the optical coating.

## Description

### TECHNICAL FIELD

The present invention relates to a method of manufacturing a radio wave penetration-type multilayer optical coating. Particularly, the radio wave penetration-type multilayer optical coating manufactured by the method of the present invention may maintain radio wave penetrability even at high temperature.

### BACKGROUND

When a smart cruise control (SCC) cover is mounted, a penetrable cover is positioned at the center of a radiator grill and a radar penetration path is coated with a multilayer optical coating made of an oxide material to ensure continuous texture (good outer appearance) with the radiator grill and to provide radar transmitting/receiving properties.

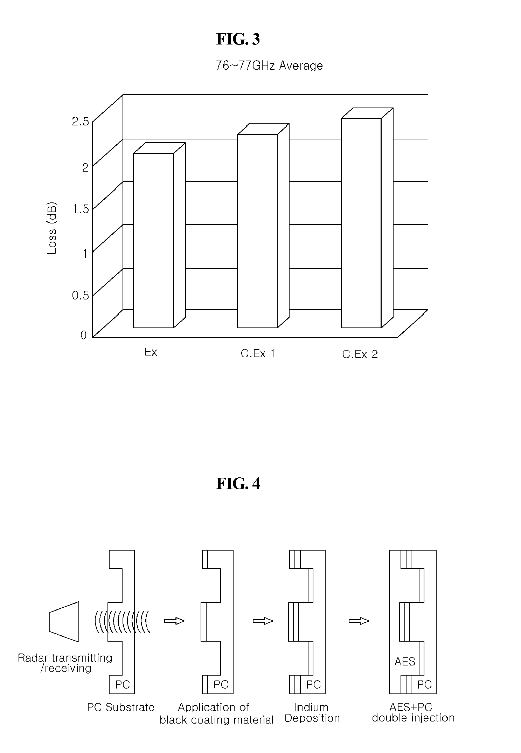

As illustrated in FIG. 4, an indium coating or film has been conventionally applied to decorate outer appearance of a radiator grill and to assure radio wave penetrability. However, the coating process using indium or tin may cause problems. For example, the total radar unit price may increase due to the use of expensive indium or tin material, and radar penetration performance may also deteriorate due to low melting point of the material and electrical properties at high temperature such that durability of the SCC cover may be undesirably reduced under severe high-temperature conditions.

Accordingly, a TiO₂/SiO₂ multilayer optical coating has been applied in the present invention so as to attain glossy/matt metallic texture and radio wave penetrability. In particular, a UV or heat curable primer may be applied onto a plastic substrate, and subsequently low refraction/high refraction deposition processes may be repeatedly carried out in a vacuum, thus obtaining glossy/matt metallic texture. Furthermore, metal oxide may be used instead of pure metal element, such that radar transmitting/receiving properties, which have been considered as critical features of the penetrable cover, may be sufficiently obtained. Further, heat resistance may be maintained even at a high temperature of about 300 °C or greater, and thus, radio wave transmitting/receiving properties may be prevented from deteriorating, thereby overcoming a problem such as poor radio wave penetration performance when the coating is exposed to high-temperature.

### SUMMARY OF THE INVENTION

Thus, in a preferred aspect, the present invention provides a method of manufacturing a radio wave penetration-type multilayer optical coating. The coating may have metallic texture and sufficient radio wave penetrability, and such properties may be maintained even at high temperature. In particular, the radio waves having wavelengths in a range of about 76GHz to 77GHz may penetrate the optical coatings of the present invention for proper operation of smart cruise control as described herein.

In an exemplary embodiment of the present invention, a radio wave penetration-type multilayer optical coating may include: a transparent first resin layer; an optical coating with a multilayer structure formed by alternately forming TiO₂ and SiO₂ on the first resin layer; and an opaque second resin layer formed on the optical coating.

The optical coating may include: a first TiO₂ layer that may be formed on the first resin layer; and each of TiO₂ and SiO₂ that may be alternately provided in a plurality of layers.

The optical coating may have a total thickness of about 500 nm or greater, and each of TiO₂ and SiO₂ layers may have a thickness of about 10 to 200 nm.

The multilayer optical coating may further include a primer layer formed between the first resin layer and the optical coating.

The multilayer optical coating may further comprise a heat insulation layer formed between the optical coating and the second resin layer.

The heat insulating layer may be formed of an opaque heat-resistant coating material.

Also provided are vehicle parts that comprises the radio wave penetration-type multilayer optical coating described herein. Exemplary vehicle parts may be, but not limited to, a smart cruise control (SCC) cover of a vehicle.

According to the present invention, a radio wave penetration-type multilayer optical coating has the following advantages.

First, efficient radar operation may be obtained through sufficient radio wave penetration. Second, radio wave penetrability may be maintained even at high temperature.

Third, the multilayer optical coating may provide metallic texture, and thus may be balanced with peripheral metal parts, thereby exhibiting a good outer appearance.

### BRIEF DESCRIPTION OF THE DRAWINGS

The above and other objects, features and advantages of the present invention will be more clearly understood from the following detailed description taken in conjunction with the accompanying drawing, in which:
FIG. 1 illustrates an exemplary radio wave penetration-type multilayer optical coating according to an exemplary embodiment of the present invention;
FIG. 2 is an exemplary graph illustrating radio wave loss depending on a frequency;
FIG. 3 is an exemplary graph illustrating an average radio wave loss;
FIG. 4 illustrates a conventional radio wave penetration-type indium-deposited coating in the related art;
FIG. 5 is an exemplary graph illustrating a surface resistance under high-temperature conditions of an exemplary multilayer optical coating and an indium coating according to an exemplary embodiment of the present invention; and
FIG. 6 is an exemplary graph of radio wave penetrability depending on a number of layers of an exemplary multilayer optical coating according to an exemplary embodiment of the present invention.

### DESCRIPTION OF SPECIFIC EMBODIMENTS

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprise", "include", "have", etc. when used in this specification, specify the presence of stated features, regions, integers, steps, operations, elements and/or components but do not preclude the presence or addition of one or more other features, regions, integers, steps, operations, elements, components, and/or combinations thereof.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

Further, unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, a detailed description will be given of an exemplary radio wave penetration-type multilayer optical coating according to various exemplary embodiments of the present invention with reference to the appended drawings.

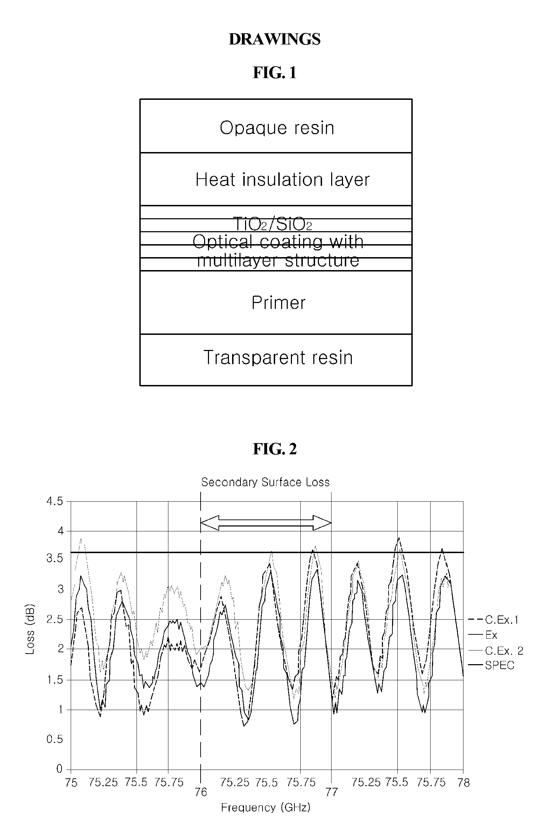

As illustrated in FIG. 1, a radio wave penetration-type multilayer optical coating according to an exemplary embodiment of the present invention includes: a transparent first resin layer; an optical coating with a multilayer structure formed by alternately forming TiO₂ and SiO₂ on the first resin layer; and an opaque second resin layer formed on the optical coating.

The first resin layer may be an outermost layer that functions to protect the optical coating and may be formed of a transparent resin so as to externally exhibit metallic texture on the optical coating.

The second resin layer may be an inner base layer that also functions to protect the optical coating, and the rear side thereof may be provided with a radio wave propagation device such as radar. The second resin layer may be typically made opaque using a black material such that light may not pass therethrough. When the second resin layer may be made opaque in this way, the amount of light reflected from the optical coating may increase.

TiO₂ and SiO₂ may be formed on the first resin layer using a typical deposition coating device generally used in the art. For example, the first resin layer is fixedly positioned in a chamber of the coating device, and the chamber is evacuated to a vacuum and then Ar gas is supplied therein. Subsequently, Ar gas is electrically discharged to form plasma, such that the inside of the chamber is electrically charged. Moreover, electric power is applied thereto and thus Ar ions collide with the surface of the first resin layer. In this manner, the surface of the first resin layer may be cleaned and simultaneously activated and thus pretreatment may be performed to enhance adhesion between the first resin layer and the coating layer, for example, the optical coating. Subsequently, an electron beam may be alternately applied to TiO₂ and SiO₂ samples so as to volatilize the samples, such that the samples may be guided onto the first resin layer and deposited. Since the adhesion of TiO₂ is greater than that of SiO₂, TiO₂ may be deposited prior to SiO₂. As such, high adhesion may refer to a high probability of a molecule colliding with the first resin layer to be adhered, not being separated.

The components for the first resin layer and the second resin layer are not particularly limited, but polycarbonate or an acrylic resin may be used. The first resin layer may be formed of a transparent material such that metallic gloss of the optical coating may be shown from the outside, and the second resin layer may be formed of an opaque material, particularly such as a black material. As such, external light may be maximally prevented from being transmitted deeper than the second resin layer.

The optical coating may include the first TiO₂ layer may be formed on the first resin layer and each of TiO₂ and SiO₂ may be alternately provided in the form of a plurality of layers. The total thickness of the optical coating may be about 500 nm or greater, and each of TiO₂ and SiO₂ layers may have a thickness of about 10 to 200 nm.

As shown in Table 1 below, when the optical coating having TiO₂ and SiO₂ layers to the total thickness of about 500 nm or greater is formed, the number of layers of the multilayer optical coating may be about 9 or greater. Further, when the optical coating having a thickness of 500 nm or greater is formed, a reflectance of about 30% or greater in the entire visible light range may be obtained, and a difference between the maximum reflectance and the minimum reflectance may be within about 5%, thereby obtaining metallic texture.

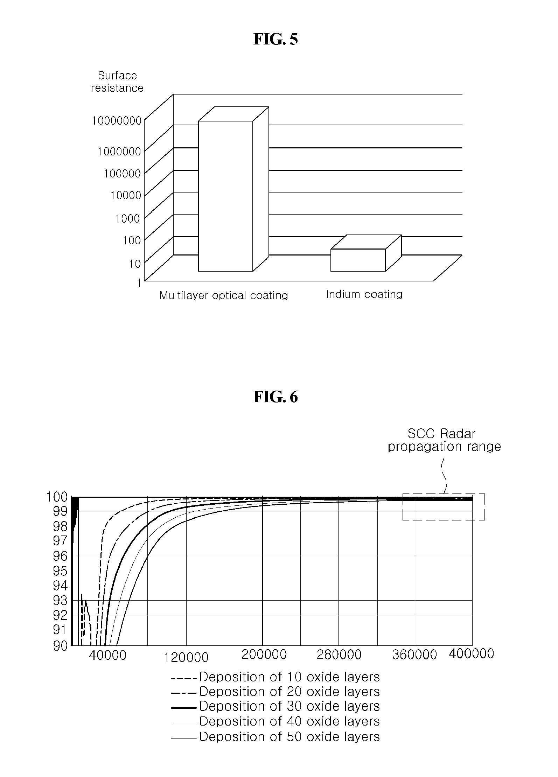

As illustrated in FIG. 6, as the thickness of the optical coating increases due to the increased number of layers thereof, absorbance and reflectance may increase. A transmittance of about 99% or greater may be maintained, regardless of the number of layers, in the range of about 360,000 to 400,000 nm corresponding to the wavelength length of typically used radar waves.

Although the maximum thickness of the optical coating may not be particularly limited, the thickness of the optical coating may be less than about 10 µm considering the limitation of the deposition device or the useful material and energy.

**[Table 1]**

| | Material | Thickness. (nm) | Number of layers | Visible light (wavelength 400 - 700 nm) reflectance % | | | | | | | |
|---|---|---|---|---|---|---|---|---|---|---|---|
| | | | | 400 | 450 | 500 | 550 | 600 | 650 | 700 | Max-Min |
| Metal | Cr | 20 | 1 | 33.23 | 35.21 | 36.34 | 36.20 | 34.05 | 31.97 | 31.46 | 4.88 |
| | | 30 | | 40.17 | 42.32 | 43.26 | 43.25 | 42.03 | 40.79 | 39.82 | 3.44 |
| | | 100 | | 41.41 | 43.44 | 43.30 | 42.21 | 41.82 | 42.48 | 43.36 | 2.03 |
| | Sn | 100 | | 27.98 | 27.90 | 28.63 | 29.55 | 29.83 | 29.25 | 28.05 | 1.93 |
| Multilayer optical coating | TiO₂ / SiO₂ | 72.8 | 2 | 4.03 | 7.95 | 9.41 | 9.72 | 9.49 | 9.05 | 8.52 | 5.69 |
| | | 115 | 3 | 6.76 | 7.02 | 7.04 | 7.06 | 7.01 | 6.89 | 6.70 | 0.28 |
| | | 580 | 9 | 33.30 | 35.25 | 36.36 | 36.31 | 34.10 | 31.98 | 32.35 | 4.38 |
| | | 1150 | 15 | 41.37 | 43.39 | 43.33 | 42.06 | 42.01 | 42.26 | 43.65 | 2.28 |
| | | 1679 | 25 | 69.50 | 71.36 | 71.61 | 72.50 | 73.39 | 72.43 | 72.38 | 3.87 |

Also, a primer layer may be further provided between the first resin layer and the optical coating.

The primer layer may enhance or inhibit metallic gloss of the optical coating. Further, for example, the primer may include a UV or heat curable material such as urethane or acryl.

The glossy or matt effect may be exhibited depending on the composition for the primer. Since various compositions for such a primer may be conventionally known, a description thereof is omitted in the present invention.

Also, a heat insulation layer may be further provided between the optical coating and the second resin layer, and the heat insulation layer may be formed of an opaque heat-resistant coating material.

When the first resin layer is injected, the optical coating is formed and the second resin layer is subsequently injected, the first resin layer may be deformed by heat transferred during adhesion of the second resin layer. Accordingly, before injection of the second resin layer, the heat insulation layer may be formed to block transfer of heat. Furthermore, since the second resin layer is not completely black, visible light may be transmitted to the rear thereof. Further, the heat insulation layer may be formed using a black heat-resistant coating material to prevent transmitting the visible light to the rear site of the second resin layer. Since the heat insulation layer plays a role in blocking transmission of light, heat insulation layer may be referred to as a black masking.

As illustrated in FIGS. 3 and 5, compared to conventional indium coating or glossy coating, an exemplary radio wave penetration-type multilayer optical coating may have reduced radio wave absorption properties. In particular, high radio wave penetrability, namely, high resistance, may be maintained even at a high temperature of 300 °C or greater.

For testing, indium and a TiO₂/SiO₂ multilayer optical coating were applied on two glass substrates, respectively, followed by thermal treatment at a temperature of about 300 °C for about 10 min, after which surface resistance values were measured. The multilayer optical coating had a substantial surface resistance of about 20 MΩ, but the indium coating may have a low surface resistance of about 5 MΩ. The material having low surface resistance may provide radio wave capturing properties like a metal having many free electrons, and thus, radio wave penetration performance may deteriorate. Accordingly, the material having low surface resistance may capture radio waves and thus may deteriorate radio wave penetrability. When the radio wave penetration-type multilayer optical coating of the present invention is applied to a radiator grill of the vehicle, the coating may be frequently exposed to high temperature by the engine or the like. According to exemplary embodiments of the present invention, stable radio wave penetrability may be maintained even at high temperature unlike conventional indium coatings.

Although the exemplary embodiments of the present invention are described with reference to the appended drawings, it will be appreciated that the present invention may be embodied in other specific forms without changing the technical spirit or essential features by one of ordinary skill in the art.

Therefore, the aforementioned embodiments are merely illustrative but are construed as limiting the present invention. The scope of the present invention is represented by the claims below rather than the detailed description, and the meaning and scope of the claims and all modifications or variations derived from equivalents thereof are intended to be incorporated within the scope of the present invention.

## Claims

1. A radio wave penetration-type multilayer optical coating, comprising:
a transparent first resin layer;
an optical coating with a multilayer structure formed by alternately forming TiO₂ and SiO₂ on the first resin layer; and
an opaque second resin layer formed on the optical coating.

2. The multilayer optical coating of claim 1, wherein the optical coating includes a first TiO₂ layer that is formed on the first resin layer and each of TiO₂ and SiO₂ that is alternately provided in a plurality oflayers.

3. The multilayer optical coating of claim 1 or 2, wherein the optical coating has a total thickness of about 500 nm or greater, and each of TiO₂ and SiO₂ layers has a thickness of about 10 to 200 nm.

4. The multilayer optical coating of any of the claims 1 to 3, further comprising a primer layer formed between the first resin layer and the optical coating.

5. The multilayer optical coating of any of the claims 1 to 3, further comprising a heat insulation layer formed between the optical coating and the second resin layer.

6. The multilayer optical coating of claim 5, wherein the heat insulating layer is formed of an opaque heat-resistant coating material.

7. A vehicle part that comprises a multilayer optical coating of claim 1.
